# EUROPEAN PATENT APPLICATION

(11) **EP 2 163 598 A1**
(43) Date of publication of application: **17.03.2010**
(21) Application number: 08765610.4
(22) Date of filing: 09.06.2008
(51) Int. Cl.: C10L 1/08, C10G 45/38

(54) **LIGHT OIL COMPOSITION**

(30) Priority: 11.06.2007 JP 2007153670
(71) Applicant: Nippon Oil Corporation, Tokyo 105-8412 (JP)
(72) Inventor: KOYAMA, Akira, Yokohama-shi Kanagawa 231-0815 (JP); IGUCHI, Yasutoshi, Yokohama-shi Kanagawa 231-0815 (JP); IKI, Hideshi, Yokohama-shi Kanagawa 231-0815 (JP); ONO, Hideki, Yokohama-shi Kanagawa 231-0815 (JP); TAKAHASHI, Shinya, Yokohama-shi Kanagawa 231-0815 (JP); TABATA, Katsumi, Yokohama-shi Kanagawa 231-0815 (JP)
(74) Representative: Grünecker, Kinkeldey, Stockmair & Schwanhäusser Anwaltssozietät
(86) International application number: PCT/JP2008/060917
(87) International publication number: WO 2008/153160

(57) **Abstract**

The present invention provides a gas oil composition which contains an environment friendly base gas oil produced from an animal or vegetable fat and/or a component originating therefrom, and having excellent life cycle CO₂ emission properties and oxidation stability and the capability of reducing environmental pollutants in the exhaust gas. The gas oil composition comprises 20 to 80 percent by volume of a base gas oil having a 90% distillation temperature of 360°C or lower, a sulfur content of 10 ppm by mass or less, and an oxygen content of 1 percent by mass or less, produced by bringing an animal or vegetable fat and/or a component originating therefrom into contact with a catalyst containing a metal supported on a porous inorganic oxide under predetermined hydrogen conditions.

## Description

### [Field of the Invention]

The present invention relates to gas oil compositions comprising an environment friendly base gas oil produced from a triglyceride-containing hydrocarbon that is an animal or vegetable fat and/or a component originating therefrom, and having excellent life cycle CO₂ emission properties and oxidation stability and the capability of reducing environmental pollutants in the exhaust gas.

### [Background of the Invention]

Conventional base gas oils are known to be produced by subjecting a straight gas oil or straight kerosene, produced by atmospheric distillation of crude oil to hydrotreating or hydrodesulfurization. Conventional gas oil compositions are produced by blending one or more types of these base gas oils and base kerosenes. If necessary, these gas oil compositions are blended with additives such as a cetane number improver or a detergent (see, for example, Konishi Seiichi, "Nenryo Kogaku Gairon", Shokabo Publishing Co., Ltd., March, 1991, pages 136 to 144).

Meanwhile, in recent years, interests in environmental issues have been socially increased, and thus automobiles, in particular diesel powered automobiles have been required to suppress the emission of exhaust gas therefrom (in particular suppression of nitrogen oxide NOx, particulate matters, aldehydes, and dioxins in exhaust gas) and as the result, a demand has arisen wherein gas oil is decreased in sulfur and aromatic contents (see, for example, "JIDOSHA GIJYUTSU" Vol. 56, No. 1, page 49-56, by Teruo Nakada, published by SOCIETY OF AUTOMOTIVE ENGINEER OF JAPAN INC).

In order to cope with the global warming issue as well as suppression of exhaust gas, fuel has been demanded to have properties contributive to a further improvement in fuel consumption and also effective in carbon dioxide (CO₂) reduction. As one means for achieving these objects, it has been studied to use synthetic fuels and plant biomass fuels, which are reproducible energies, as alternative fuels.

Examples of methods for utilizing such plant biomass fuels as gas oil include those wherein a vegetable fat is directly mixed with gas oil and wherein a fatty acid alkyl ester (hereinafter abbreviated as "FAME") produced by ester-exchanging a vegetable fat and an ester is mixed with gas oil.

Particularly, the FAME contains almost no aromatic compound, which is regarded as being largely contributive to the production of soot discharged with an exhaust gas or no sulfur component giving significant influences such as poisoning of an exhaust-gas post-processing catalyst and thus has been attracted as a dominant possibility for an alternative fuel. The FAME is positioned as a reproducible energy because it is derived from plants. Thus, the carbon dioxide caused by BDF is not counted as the emissions under the carbon dioxide reduction protocol entered among nations in 1997, so-called "Kyoto Protocol", and BDF has, therefore, political merits.

However, natural vegetable fats and fatty acid alkyl esters produced therefrom contain intrinsically a large quantity of heavy components and thus are poor in burnout properties upon combustion in engines, possibly leading to the increased emissions of unburned hydrocarbons. The vegetable fats and fatty acid alkyl esters are oxygen-containing compounds and thus have the likelihood that they would increase aldehydes exhausted upon combustion. Vegetable fats and FAME that contain many saturated fatty acid groups are poor in handling characteristics as fuel because it is solid at ambient temperatures and would fail to secure low-temperature fluidity. Vegetable fats and FAME that contain many unsaturated fatty acid groups are poor in oxidation stability due to its chemical composition and would be deteriorated in color and cause the formation of sludge and adverse affects on engine parts. Further, there is a strong concern that a fatty acid glyceride and an alkyl alcohol, which are raw materials for producing FAME by refining and a glycerin mixture which is by-product thereof adversely affects engine parts and fuel injection systems.

These tendencies are not found in the existing gas oils. Therefore, the same problems arise upon use of biomass fuel not only alone but also in combination with an existing gas oil. It is thus necessary to give more concerns to the oxidation stability, low temperature properties and combustibility of biomass fuel itself as well as a biomass fuel-mixed gas oil than ever before.

Since natural vegetable fats and FAME produced therefrom often contain a slight amount of chlorine compounds, a concern has arisen in which the use of the vegetable fats or FAME as an automobile fuel would increase the dioxin concentration in the exhaust gas.

With regard to the origin of chlorines, it is unlikely that they exist intrinsically in plants. It is rather presumed that chlorines are contained due to external factors such as chlorines contained in agricultural chemicals used during the process of cultivation of plants or in water (steam) used for producing oil from plants.

Therefore, the use of natural vegetable fats and FAME that is an fatty acid alkyl ester mixture produced from such vegetable fats can not provide a gas oil composition that is improved in properties such as a reduction in harmful exhaust substances such as dioxins, life cycle CO₂ emission properties and oxidation stability all together. Since these engine performances are closely related to other fuel properties, it is very difficult to produce a fuel of high quality which can satisfy all of these requisite performances in a higher level. Furthermore, there has not existed any example or idea on the basis of studies of a fuel which can satisfy all the performances required for commercially available fuel oils and a realistic process for producing such a fuel.

### [Disclosure of the Invention]

The present invention was made in view of the foregoing situations and has an object to provide a gas oil composition comprising an environment friendly base gas oil produced from a triglyceride-containing hydrocarbon that is an animal or vegetable fat and/or a component originating therefrom and having excellent life cycle CO₂ emission properties and oxidation stability and the capability of reducing environmental pollutants such as dioxins in exhaust gas.

The present invention was accomplished as the results of extensive research and study carried out to solve the above problems.

That is, the present invention relates to a gas oil composition comprising:

20 to 80 percent by volume of a base gas oil with a 90% distillation temperature of 360°C or lower, a sulfur content of 10 ppm by mass or less, and an oxygen content of 1 percent by mass or less, produced by bringing in the presence of hydrogen a feedstock comprising an animal or vegetable fat and/or a component originating therefrom, into contact with a catalyst comprising a porous inorganic oxide comprising two or more types of elements selected from aluminum, silicon, zirconium, boron, titanium and magnesium and one or more types of metals selected from the group consisting of the Groups 6A and 8 elements of the periodic table, supported thereon, under conditions where the hydrogen pressure is from 2 to 13 MPa, the liquid hourly space velocity is from 0.1 to 3.0 h⁻¹, the hydrogen oil ratio is from 150 to 1500 NL/L, and the reaction temperature is from 150 to 480°C,
the gas oil composition having a 90% distillation temperature of 360°C or lower, a total aromatic content of 15 percent by volume or less, a cetane index of 45 or greater, a sulfur content of 10 ppm by mass or less, an oxygen content of 1 percent by mass or less, a fatty acid alkyl ester content of 3.5 percent by mass or less, an acid number of 0.13 mgKOH/g or less, a methanol content of 0.01 percent by mass or less, a triglyceride content of 0.01 percent by mass or less, and an increase in acid number after an oxidation stability test of 0.12 mgKOH/g or less.

The present invention also relates to a gas oil composition comprising:
a base gas oil with a 90% distillation temperature of 360°C or lower, a sulfur content of 10 ppm by mass or less, and an oxygen content of 1 percent by mass or less, produced by bringing in the presence of hydrogen a feedstock comprising an animal or vegetable fat and/or a component originating therefrom, into contact with a catalyst comprising a porous inorganic oxide comprising two or more types of elements selected from aluminum, silicon, zirconium, boron, titanium and magnesium and one or more types of metals selected from the group consisting of the Groups 6A and 8 elements of the periodic table, supported thereon, under conditions where the hydrogen pressure is from 2 to 13 MPa, the liquid hourly space velocity is from 0.1 to 3.0 h⁻¹, the hydrogen oil ratio is from 150 to 1500 NL/L, and the reaction temperature is from 150 to 480°C; and
a hydrorefined oil produced by refining crude oil, mixed at a blend ratio of 20 to 80 percent by volume:80 to 20 percent by volume,
the gas oil composition having a 90% distillation temperature of 360°C or lower, a total aromatic content of 15 percent by volume or less, a cetane index of 45 or greater, a sulfur content of 10 ppm by mass or less, an oxygen content of 1 percent by mass or less, a fatty acid alkyl ester content of 3.5 percent by mass or less, an acid number of 0.13 mgKOH/g or less, a methanol content of 0.01 percent by mass or less, a triglyceride content of 0.01 percent by mass or less, and an increase in acid number after an oxidation stability test of 0.12 mgKOH/g or less.

The present invention also relates to a gas oil composition comprising:
20 to 80 percent by volume of a base gas oil with a 90% distillation temperature of 360°C or lower, a sulfur content of 10 ppm by mass or less, and an oxygen content of 1 percent by mass or less, produced by bringing in the presence of hydrogen a feedstock comprising a mixture of 10 to 90 percent by volume of an animal or vegetable fat and/or a component originating therefrom and 90 to 10 percent by volume of a petroleum base oil produced by refining crude oil, into contact with a catalyst comprising a porous inorganic oxide comprising two or more types of elements selected from aluminum, silicon, zirconium, boron, titanium and magnesium and one or more types of metals selected from the group consisting of the Groups 6A and 8 elements of the periodic table, supported thereon, under conditions where the hydrogen pressure is from 2 to 13 MPa, the liquid hourly space velocity is from 0.1 to 3.0 h⁻¹, the hydrogen oil ratio is from 150 to 1500 NL/L, and the reaction temperature is from 150 to 480°C;
the gas oil composition having a 90% distillation temperature of 360°C or lower, a total aromatic content of 15 percent by volume or less, a cetane index of 45 or greater, a sulfur content of 10 ppm by mass or less, an oxygen content of 1 percent by mass or less, a fatty acid alkyl ester content of 3.5 percent by mass or less, an acid number of 0.13 mgKOH/g or less, a methanol content of 0.01 percent by mass or less, a triglyceride content of 0.01 percent by mass or less, and an increase in acid number after an oxidation stability test of 0.12 mgKOH/g or less.

The present invention also relates to a gas oil composition comprising:
a base gas oil with a 90% distillation temperature of 360°C or lower, a sulfur content of 10 ppm by mass or less, and an oxygen content of 1 percent by mass or less, produced by bringing in the presence of hydrogen a feedstock comprising a mixture of 10 to 90 percent by volume of an animal or vegetable fat and/or a component originating therefrom and 90 to 10 percent by volume of a petroleum base oil produced by refining crude oil, into contact with a catalyst comprising a porous inorganic oxide comprising two or more types of elements selected from aluminum, silicon, zirconium, boron, titanium and magnesium and one or more types of metals selected from the group consisting of the Groups 6A and 8 elements of the periodic table, supported thereon, under conditions where the hydrogen pressure is from 2 to 13 MPa, the liquid hourly space velocity is from 0.1 to 3.0 h⁻¹, the hydrogen oil ratio is from 150 to 1500 NL/L, and the reaction temperature is from 150 to 480°C; and
a hydrorefined oil produced by refining crude oil, mixed at a blend ratio of 20 to 80 percent by volume:80 to 20 percent by volume,
the gas oil composition having a 90% distillation temperature of 360°C or lower, a total aromatic content of 15 percent by volume or less, a cetane index of 45 or greater, a sulfur content of 10 ppm by mass or less, an oxygen content of 1 percent by mass or less, a fatty acid alkyl ester content of 3.5 percent by mass or less, an acid number of 0.13 mgKOH/g or less, a methanol content of 0.01 percent by mass or less, a triglyceride content of 0.01 percent by mass or less, and an increase in acid number after an oxidation stability test of 0.12 mgKOH/g or less.

The present invention also relates to the above-described compositions containing substantially no chlorine.

### [Effects of the Invention]

The gas oil compositions of the present invention contain an environment friendly base gas oil produced from a raw material that is an animal or vegetable fat and/or a component originating therefrom and thus have excellent life cycle CO₂ emission properties and oxidation stability and the capability of reducing significantly the dioxin level in the exhaust gas by removing completely chlorines originating from the raw material by hydrotreating, all of which were difficult to achieve with the conventional gas oil compositions.

### [Best Mode of Carrying out the Invention]

The present invention will be described in more detail below.

Used as a component of the gas oil compositions according to the present invention is an environment friendly base gas oil. Examples of the environment friendly base gas oil include base gas oils with a 90% distillation temperature of 360°C or lower, a sulfur content of 10 ppm by mass or less, and an oxygen content of 1 percent by mass or less, produced by bringing in the presence of hydrogen a feedstock comprising an animal or vegetable fat and/or a component originating therefrom, into contact with a catalyst comprising a porous inorganic oxide comprising two or more types of elements selected from aluminum, silicon, zirconium, boron, titanium and magnesium and one or more types of metals selected from the group consisting of the Groups 6A and 8 elements of the periodic table, supported thereon, under conditions where the hydrogen pressure is from 2 to 13 MPa, the liquid hourly space velocity is from 0.1 to 3.0 h⁻¹, the hydrogen oil ratio is from 150 to 1500 NL/L, and the reaction temperature is from 150 to 480°C. Alternative examples include base gas oils with a 90% distillation temperature of 360°C or lower, a sulfur content of 10 ppm by mass or less, and an oxygen content of 1 percent by mass or less, produced by bringing in the presence of hydrogen a feedstock comprising a mixture of 10 to 90 percent by volume of an animal or vegetable fat and/or a component originating therefrom and 90 to 10 percent by volume of a petroleum base oil produced by refining crude oil, into contact with a catalyst comprising a porous inorganic oxide comprising two or more types of elements selected from aluminum, silicon, zirconium, boron, titanium and magnesium and one or more types of metals selected from the group consisting of the Groups 6A and 8 elements of the periodic table, supported thereon, under conditions where the hydrogen pressure is from 2 to 13 MPa, the liquid hourly space velocity is from 0.1 to 3.0 h⁻¹, the hydrogen oil ratio is from 150 to 1500 NL/L, and the reaction temperature is from 150 to 480°C.

The raw material oil (feedstock) of the base gas oil may be an animal or vegetable fat and/or a component originating therefrom or a mixed oil of an animal or vegetable fat and/or a component originating therefrom and a petroleum base oil produced by refining crude oil.

The term "an animal or vegetable fat or a component originating therefrom" used herein denotes natural or artificially made or produced animal or vegetable fats, animal or vegetable fat components and components made or produced from these fats. Examples of raw materials of the animal fats and animal oils include beef tallow, milk fat (butter), lard, mutton tallow, whale oil, fish oil, and liver oil. Examples of raw materials of the vegetable fats and vegetable oils include the seeds and other parts of coconut, palm tree, olive, safflower, rape (rape blossoms), rice bran, sunflower, cotton seed, corn, soy bean, sesame, and flaxseed. The use of fats and oil other than these would not create any problem. The feedstock may be of solid or liquid but are preferably produced from vegetable fats or vegetable oils with the objective of easy handling, carbon dioxide absorptivity, and high productivity.
Alternatively, waste oils resulting from the use of these animal and vegetable oils for household, industry and food preparation purposes may be used as the feedstock after the residual matters are removed from these oils.

Examples of the typical composition of the fatty acid part of the glyceride compounds contained in these feedstocks include fatty acids, so-called saturated fatty acids having no unsaturated bond in the molecules, such as butyric acid (C₃H₇COOH), caproic acid (C₅H₁₁COOH), caprylic acid (C₇H₁₅COOH), capric acid (C₉H₁₉COOH), lauric acid (C₁₁H₂₃COOH), myristic acid (C₁₃H₂₇COOH), palmitic acid (C₁₅H₃₁COOH), stearic acid (C₁₇H₃₅COOH), and so-called unsaturated fatty acids having one or more unsaturated bonds in the molecules, such as oleic acid (C₁₇H₃₃COOH), linoleic acid (C₁₇H₃₁COOH), linolenic acid (C₁₇H₂₉COOH) and ricinoleic acid (C₁₇H₃₂(OH)COOH). In general, the hydrocarbon parts of these fatty acids contained in substances existing in nature are mostly of straight chain.
However, the fatty acid may be any of those having a side chain structure, i.e., isomers as long as the properties defined by the present invention are satisfied. The unsaturated fatty acid may be any of those existence of which are generally recognized in nature as well as those having an unsaturated bond per molecule, the position of which is adjusted through chemical synthesis as long as the properties defined by the present invention are satisfied.

The above-described feedstocks (animal or vegetable fats and components originating therefrom) contain one or more of these fatty acids, which vary depending on the raw materials. For example, coconuts oil contains a relatively large amount of saturated fatty acid groups such as lauric acid and myristic acid groups while soy bean oil contains a large amount of unsaturated fatty acid groups such as oleic acid and linoleic acid groups.

The raw material oil (feedstock) of the base gas oil may be a mixed oil of an animal or vegetable fat and/or a component originating therefrom and a petroleum base oil produced by refining crude oil.

Examples of the petroleum base oil produced by refining crude oil include petroleum base gas oils, petroleum base kerosenes, synthetic base gas oils, and synthetic base kerosenes.

Examples of the petroleum base gas oils include straight gas oils obtained from an atmospheric distillation unit for crude oil; vacuum gas oils produced by treating straight heavy oil or residue obtained from an atmospheric distillation unit, in a vacuum distillation unit; hydrorefined gas oils produced by hydrorefining straight gas oil or vacuum gas oil; hydrodesulfurized gas oils produced by hydrodesulfurizing straight gas oil or vacuum gas oil in a single or multiple step under conditions that are severer than those for normal hydrorefining; and hydrocracked gas oils produced by hydrocracking the foregoing various base gas oils.

Examples of the petroleum base kerosenes include straight kerosenes obtained from an atmospheric distillation unit for crude oil; vacuum kerosenes produced by treating straight heavy oil or residue obtained from an atmospheric distillation unit, in a vacuum distillation unit; hydrorefined kerosenes produced by hydrorefining straight kerosene or kerosene; hydrodesulfurized kerosenes produced by hydrodesulfurizing straight kerosene or vacuum kerosene in a single or multiple step under conditions that are severer than those for normal hydrorefining; and hydrocracked kerosenes produced by hydrocracking the foregoing various base kerosenes.

In the present invention, various treating conditions for producing these petroleum base oils may be suitably selected. For example, hydrogen partial pressure upon hydrodesulfurization is preferable 1 MPa or greater, more preferably 3 MPa or greater, particularly preferably 5 MPa or greater. Although there is no particular restriction on the upper limit of hydrogen partial pressure, it is preferably 10 MPa or lower in view of the pressure resistance of a reactor. Reaction temperature upon hydrodesulfurization is preferably 300°C or higher, more preferably 320°C or higher, particularly preferably 340°C or higher.
Although there is no particular restriction on the upper limit of the reaction temperature, it is preferably 400°C or lower in view of the heat resistance of a reactor. Liquid hourly space velocity upon hydrodesulfurization is preferably 6 h⁻¹ or lower, more preferably 4 h⁻¹ or lower, particularly preferably 2 h⁻¹ or lower. Although there is no particular restriction on the lower limit of the liquid hourly space velocity, it is preferably 0.1 h⁻¹ or greater in view of drift. Although there is no particular restriction on the catalyst for hydrodesulfurization, examples thereof include those wherein two or three types of metals such as Ni, Co, Mo, W, Pd, and Pt are used in combination. More specific preferable examples include Co-Mo, Ni-Mo, Ni-Co-MO, and Ni-W based catalysts. Among these catalysts, more preferred are Co-Mo and Ni-Mo based catalysts.

Synthetic base gas oil refers to those produced by chemical-synthesizing a raw material such as natural gas, asphalts, or coal. Examples of the chemical synthesizing method include indirect and direct liquefaction methods. Fischer-Tropsch synthesizing method may be a typical examples of the synthesizing technique. However, the synthetic base gas oil used in the present invention is not limited to those produced by these methods. Generally, synthetic base gas oil contains saturated hydrocarbons as a main component and more specifically is composed of normal paraffins, isoparaffins, and naphthenes.

Synthetic base kerosene refers to those produced by chemical-synthesizing a raw material such as natural gas, asphalts, or coal. Examples of the chemical synthesizing method include indirect and direct liquefaction methods. Fischer-Tropsch synthesizing method may be exemplified as a typical synthesizing technique. However, the synthetic base kerosene used in the present invention is not limited to those produced by these methods. Generally, synthetic kerosene contains saturated hydrocarbons as a main component and more specifically is composed of normal paraffins, isoparaffins, and naphthenes.

When the feedstock is a mixture of an animal or vegetable fat and/or a component originating therefrom and a petroleum base oil produced by refining crude oil, the mix ratio of an animal or vegetable fat and/or a component originating therefrom : a petroleum base oil produced by refining crude oil is 10 to 90 percent by volume:90 to 10 percent by volume, preferably 20 to 80 percent by volume:80 to 20 percent by volume, more preferably 40 to 60 percent by volume:60 to 40 percent by volume.

In the present invention, the raw material oil (feedstock) comprising the above-described animal or vegetable fat and/or component originating therefrom or a mixture of the above-described animal or vegetable fat and/or component originating therefrom and the above-described petroleum base oil produced by refining crude oil is hydrotreated in the presence of a catalyst.

Examples of the hydrotreating catalyst include those comprising a porous inorganic oxide comprising two or more types of elements selected from aluminum, silicon, zirconium, boron, titanium and magnesium and one or more types of metals selected from the group consisting of the Groups 6A and 8 elements of the periodic table, supported thereon.

The support of the hydrogenation catalyst may be a porous inorganic oxide containing two or more elements selected from aluminum, silicon, zirconium, boron, titanium and magnesium. The support is generally an alumina-containing porous inorganic oxide. Examples of other components constituting the support include silica, titania, zirconia, boria and magnesia.
The support is preferably a composite oxide containing alumina and at least one or more components selected from the other constituting components. The support may further contain phosphorus in addition to these components. The total content of the components other than alumina is preferably from 1 to 20 percent by mass, more preferably 2 to 15 percent by mass. If the total content is less than 1 percent by mass, the resulting catalyst fails to obtain a sufficient catalytic surface area and thus would be reduced in activity. If the total content is more than 20 percent by mass, the acidic properties of the support is increased, possibly leading to a reduction in activity caused by the formation of coke. When phosphorus is contained as a support constituting component, the content of phosphorus is from 1 to 5 percent by mass, more preferably from 2 to 3.5 percent by mass in terms of oxide.

There is no particular restriction on the raw materials that are precursors of silica, titania, zirconia, boria and magnesia that are the support constituting components other than alumina.
Therefore, a solution containing silicon, titanium, zirconium, boron or magnesium is generally used. For silicon, silicic acid, sodium silicate, and silica sol may be used. For titanium, titanium sulfate, titanium tetrachloride, and various alkoxide salts may be used. For zirconium, zirconium sulfate and various alkoxide salts may be used. For boron, boric acid may be used. For phosphorus, phosphoric acid and alkali metal salts thereof may be used.

The raw materials of these support constituting components other than alumina are preferably added at any stage prior to calcination of the support. For example, the raw materials may be added to an aluminum aqueous solution which is then formed into an aluminum hydroxide gel containing these support constituting components, or may be added to a prepared aluminum hydroxide gel. Alternatively, the raw materials may be added at a step of kneading a mixture of water or an acid aqueous solution and a commercially available alumina intermediate or boehmite powder. Preferably, these support constituting components are contained in an aluminum hydroxide gel during the process of preparation thereof. Although the mechanism exhibiting advantageous effects attained by addition of these support constituting components other than alumina has not been elucidated, it is assumed that these components form a complex oxide state together with aluminum. It is thus presumed that this increase the surface area of the support and cause some interaction with the active metals, thereby giving influences to the activity of the catalyst.

The hydrogenating catalyst contains at least one metal selected from the Groups 6A and 8 metals of the periodic table, as an active metal. Examples of the Group 6A metal include Mo and W. Examples of the Group 8 metal include Ni, Co, Pd, Pt, Rh, Ir, and Au.

When the raw material oil (feedstock) is an animal or vegetable fat and/or a component originating therefrom, the hydrotreating catalyst contains preferably two or more metals selected from the Groups 6A and 8 metals of the periodic table. Example of such metals include Co-Mo, Ni-Mo, Ni-Co-MO, and Ni-W. Upon hydrogenation, preferably these metals are converted to be in the form of sulfides before being used.

Alternatively, when the raw material oil (feedstock) is a mixture of an animal or vegetable fat and/or a component originating therefrom and a petroleum base oil produced by refining crude oil, the active metal is preferably one or more metals selected from the Group 8 elements. Among these metals, the active metal is preferably one or more metals selected from Pd, Pt, Rh, Ir, Au, and Ni and more preferably a combination thereof. Preferable combinations include Pd-Pt, Pd-Ir, Pd-Rh, Pd-Au, Pd-Ni, Pt-Rh, Pt-Ir, Pt-Au, Pt-Ni, Rh-Ir, Rh-Au, Rh-Ni, Ir-Au, Ir-Ni, Au-Ni, Pd-Pt-Rh, Pd-Pt-Ir, and Pt-Pd-Ni. More preferable combinations include Pd-Pt, Pd-Ni, Pr-Ni, Pt-Ni, Pd-Ir, Pt-Rh, Pt-Ir, Rh-Ir, Pd-Pt-Rh, Pd-Pt-Ni, and Pd-Pt-Ir.
Further more preferable examples include Pd-Pt, Pd-Ni, Pt-Ni, Pd-Ir, Pt-Ir, Pd-Pt-Ni, and Pd-Pt-Ir. Upon hydrogenation, preferably these metals are converted to be in the form of sulfides before being used.

There is no particular restriction on the method of supporting the active metals on any of the hydrotreating catalysts. Therefore, any conventional method for producing a usual desulfurization catalyst may be employed. A method is preferably employed in which a support is impregnated with a solution containing salts of the active metals. Alternatively, an equilibrium adsorption method, pore-filling method, or incipient-wetness method is also preferably used.
For example, the pore-filling method is a method in which the pore volume of a support is measured in advance, and then the support is impregnated with the same volume of a metal salt solution. There is no particular restriction on the method of impregnating the support with a solution. Therefore, any suitable method may be used depending on the amount of the metals to be supported and physical properties of the support.

The hydrotreating of the feedstock is carried out preferably under conditions where the hydrogen pressure is in the range of 2 to 13 MPa, the liquid hourly space velocity (LHSV) is in the range of 0.1 to 3.0 h⁻¹ and the hydrogen/oil ratio is in the range of 150 to 1500 NL/L, more preferably under conditions where the hydrogen pressure is in the range of 3 to 12 MPa, the liquid hourly space velocity is in the range of 0.2 to 2.0 h⁻¹, and the hydrogen/oil ratio is in the range of 200 to 1200 NL/L, more preferably under conditions
where the hydrogen pressure is in the range of 4 to 10.5 MPa, the liquid hourly space velocity is in the range of 0.25 to 1.0 h⁻¹, and the hydrogen/oil ratio is in the range of 300 to 1000 NL/1. Each of the conditions is a factor exerting an influence on the reaction activity. For example, if the hydrogen pressure and hydrogen/oil ratio are less than the lower limits, the reactivity tends to reduce, and the activity tends to reduce rapidly. If the hydrogen pressure and hydrogen/oil ratio exceed the upper limits, an enormous plant investment for a compressor may be required.
Lower liquid hourly space velocity tends to be more advantageous for the reactions. However, if the liquid hourly space velocity is lower than the lower limit, an enormous plant investment for construction of a reactor with an extremely large volume may be required. If the liquid hourly space velocity exceeds the upper limit, the reaction tends to proceed insufficiently.

The reaction temperature can be arbitrarily adjusted so as to obtain the decomposition rate of the intended heavy fraction of the feedstock or the intended fraction yield. Furthermore, the reaction temperatures in the pretreatment catalyst section and the hydrocracking catalyst section of the reactor can be arbitrarily adjusted, respectively so as to suppress the oxygen content of the distillate treated with the pretreatment catalyst to a level lower than the aforesaid upper limit. The average temperature in the whole reactor is set to generally from 150 to 480°C, preferably from 220 to 400°C, more preferably from 260 to 360°C. If the reaction temperature is lower than the lower limit, the reaction would not proceed sufficiently. If the reaction temperature exceeds the upper limit, excessive decomposition would proceed and the yield of the liquid product would be reduced.

The reactor may be of a fixed bed mode. That is, supply of hydrogen to the feedstock may be carried out in the form of counter flow or parallel flow.
Alternatively, counter flow and parallel flow may be combined in a plurality of reactors. The supply mode of the feedstock is generally down flow. Gas-liquid cocurrent flow may be employed. The reactor may be a single reactor or a combination of a plurality of reactors. A single reactor with the interior segmented into a plurality of catalyst beds may also be employed. In the present invention, the distillate hydrorefined in the reactor is fractionated into predetermined fractions through gas-liquid separation and rectification. Thereupon, if moisture is produced in associated with the reaction and the sulfur components are contained in the oil to be treated, hydrogen sulfide may be generated. Therefore, a gas-liquid separation device or any other by-produced gas removal device may be installed between the plurality of reactors or in the product recovering step.

Hydrogen gas is generally introduced into a first reactor via its inlet, accompanying the feedstock, before or after the feedstock passes through a heating furnace. Alternatively, hydrogen gas may be introduced from the spaces between the catalyst beds or between a plurality of reactors for the purposes of controlling the temperature in the reactors and maintaining the hydrogen pressure over the whole reactors. Hydrogen to be introduced in such a manner is referred to as "quenching hydrogen". The ratio of the quenching hydrogen to the hydrogen introduced, accompanying the feedstock is preferably from 10 to 60 percent by volume, more preferably from 15 to 50 percent by volume. The ratio of less than the lower limit would cause a tendency that the reaction at reaction sites in the subsequent stages does not proceed sufficiently. The ratio in excess of the upper limit would cause a tendency that the reaction near the inlet of the reactor does not proceed sufficiently.

If necessary, in addition to the above-described catalyst (hydrotreating catalyst), a guard catalyst, a demetallization catalyst, and an inert filler may be used alone or in combination for the purposes of trapping scale fractions flowing into the reactor, accompanied with the feedstock and supporting the hydrotreating catalyst at portions segmenting the catalyst beds.

Through the above described procedures, a base gas oil (environment friendly base gas oil) is produced, which has a 90% distillation temperature of 360°C or lower, a sulfur content of 10 ppm by mass or less, and an oxygen content of 1 percent by mass or less.

The gas oil composition of the present invention contains 20 to 80 percent by volume of such a base gas oil.

In the present invention, a gas oil composition satisfying the predetermined properties defined by the present invention may be produced by mixing any of the above environment friendly base gas oils with a hydrorefined oil produced by refining crude oil. The mix ratio of the environment friendly base gas oil is from 20 to 80 percent by volume, preferably from 30 to 60 percent by volume.

Examples of the hydrorefined oil produced by refining crude oil include petroleum hydrotreated oils having a gas oil fraction refined from crude oil and those having a kerosene fraction refined from crude oil.

Examples of the petroleum hydrotreated oils having a gas oil fraction refined from crude oil include hydrotreated gas oils and hydrodesulfurized gas oils, produced by hydrotreating petroleum hydrocarbons (petroleum hydrocarbons having a gas oil fraction refined from crude oil) such as straight gas oil obtained from an atmospheric distillation unit for crude oil, vacuum gas oil produced by treating straight heavy oil or residue obtained from an atmospheric distillation unit, in a vacuum distillation unit, and catalytic-cracked or hydrocracked oil produced by catalytic-cracking or hydrocracking vacuum heavy gas oil or desulfurized fuel oil.

Examples of the petroleum hydrotreated oils having a kerosene fraction refined from crude oil include hydrotreated kerosenes produced by hydrotreating petroleum hydrocarbons (petroleum hydrocarbons having a kerosene fraction refined from crude oil) such as straight kerosene obtained from an atmospheric distillation unit for crude oil and hydrocracked kerosenes co-produced with hydrocracked gas oil.

These petroleum hydrotreated oils may be composed by blending a plurality of gas oil fraction base oils and a plurality of kerosene fraction base oils to such an extent that the predetermined conditions are satisfied. Alternatively, synthetic gas oils and synthetic kerosenes synthesized from natural gas, asphalt, coal or biomass may also be used.

Hydrotreating of the petroleum hydrocarbon having a gas oil fraction is generally carried out under the conditions of a reaction temperature of 170 to 320°C, a hydrogen pressure of 2 to 10 MPa, an LHSV of 0.1 to 2 h⁻¹, and a hydrogen/oil ratio of 100 to 800 NL/L, preferably a reaction temperature of 175 to 300°C, a hydrogen pressure of 2.5 to 8 MPa, an LHSV of 0.2 to 1.5 h⁻¹, and a hydrogen/oil ratio of 150 to 600 NL/1, more preferably a reaction temperature of 180 to 280°C, a hydrogen pressure of 3 to 7 MPa, an LHSV of 0.3 to 1.2 h⁻¹, and a hydrogen/oil ratio of 150 to 500 NL/L. A lower reaction temperature is advantageous for hydrogenation but is not preferable for desulfurization. Higher the hydrogen pressure and hydrogen/oil ratio, more desulfurization and hydrogenation are accelerated. However, their economical optimum points exist. A lower LHSV is advantageous for the reaction. However, a too low LHSV is disadvantageous because an enormous plant investment for construction of a reactor with a large volume is required.

Hydrotreating of the petroleum hydrocarbon having a kerosene fraction is generally carried out under the conditions of a reaction temperature of 220 to 350°C, a hydrogen pressure of 1 to 6 MPa, an LHSV of 0.1 to 10 h⁻¹, and a hydrogen/oil ratio of 10 to 300 NL/L, preferably a reaction temperature of 250 to 340°C, a hydrogen pressure of 2 to 5 MPa, an LHSV of 1 to 10 h⁻¹, and a hydrogen/oil ratio of 30 to 200 NL/1, more preferably a reaction temperature of 270 to 330°C, a hydrogen pressure of 2 to 4 MPa, an LHSV of 2 to 10 h⁻¹, and a hydrogen/oil ratio of 50 to 200 NL/L. A lower reaction temperature is advantageous for hydrogenation but is not preferable for desulfurization. Higher the hydrogen pressure and hydrogen/oil ratio, more desulfurization and hydrogenation are accelerated.
However, their economical optimum points exist. A lower LHSV is advantageous for the reaction. However, a too low LHSV is disadvantageous because an enormous plant investment for construction of a reactor with an extremely large volume is required.

The hydrotreating unit may be of any structure, and a single or a plurality of reactors in combination may be used. Hydrogen may be additionally introduced into the spaces between a plurality of reactors. The hydrotreating unit may be provided with a gas-liquid separation system or a hydrogen sulfide removal system.

The reaction system of the hydrotreating unit is preferably a fixed bed system. Hydrogen may be supplied in counterflow or parallel flow with respect to the feedstock. When the hydrotreating unit has a plurality of reactors, counterflow and parallel flow may be combined. The supply mode of the feedstock is generally down flow and is preferably a gas-liquid cocurrent flow mode. Hydrogen gas may be supplied as quencher into a middle portion of a reactor for the purposes of removing the reaction heat or increasing the hydrogen partial pressure.

The catalyst used for hydrotreating comprises a hydrogenation active metal supported on a porous support. The porous support may be a porous inorganic oxide composed of mainly alumina. Examples of the inorganic oxide include alumina, titania, zirconia, boria, silica, and zeolite. In the present invention, the support is preferably composed of alumina and at least one type selected from titania, zirconia, boria, silica, and zeolite. There is no particular restriction on the method of producing the support. Therefore, there may be employed any method using raw materials in the form of sols or salt compounds each containing any of the elements. Alternatively, the support may be prepared by forming a complex oxide or hydroxide such as silica alumina, silica zirconia, alumina titania, silica titania, and alumina boria and then adding at any step alumina in the form of alumina gel, a hydroxide, or a suitable solution. Alumina can be contained in any percentage to other oxides on the basis of the porous support. However, the content of alumina is preferably 90 percent by mass or less, more preferably 60 percent by mass or less, more preferably 40 percent by mass or less, of the support mass. These conditions and the catalyst are not particularly restricted as long as the properties of the feedstock are satisfied.

Zeolite is a crystalline alumino silicate.
Examples of the crystalline structure include faujasite, pentasil, and mordenite. These zeolites may be those ultra-stabilized by a specific hydrothermal treatment and/or acid treatment or those whose alumina content is adjusted. Preferred zeolites are those of faujasite and mordenite types, and particularly preferred zeolites are those of Y and beta types. The zeolites of Y type are preferably ultra-stabilized. The ultra-stabilized zeolite have a micro porous structure peculiar thereto, so-called micro pores of 20 Å or smaller and also newly formed pores in the range of 20 to 100 Å. The hydrothermal treatment may be carried out under known conditions.

The active metal of the catalyst used for hydrotreating is at least one metal selected from the Group 6A metals of the periodic table, preferably at least one metal selected from Mo and W. The active metal may be a combination of the Group 6A metals and Group 8 metals, specifically a combination of Mo or W and Co or Ni, such as Co-Mo, Co-W, Ni-Mo, Ni-W, Co-Ni-Mo, and Co-Ni-W. The metal sources of these metals may be inorganic salts or complex salt compounds which have been conventionally used. The method of supporting the metal may be any of methods such as immersion and ion exchange which are used for a hydrogenation catalyst. When a plurality of metals are supported, they may be supported using a mixed solution thereof at the same time. Alternatively, a plurality of metals may be supported using solutions each containing any of the metals one after another. These metal solutions may be aqueous solutions or those produced using an organic solvent.

The metal(s) may be supported on the porous support after completion of all the steps for preparing the support. Alternatively, the metal(s) may be supported on the porous support in the form of a suitable oxide, complex oxide or zeolite produced at the intermediate stage of the preparation of the porous support and then may be subjected to gel-preparation or heat-concentration and kneading.

There is no particular restriction on the amount of the active metal (s) to be supported. However, the amount is from 0.1 to 10 percent by mass, preferably from 0.15 to 5 percent by mass, more preferably from 0.2 to 3 percent by mass on the basis of the catalyst mass.

The catalyst is preferably used after it is subjected to a pre-reduction treatment under a hydrogen stream. In general, the active metal (s) are subjected to heat at 200°C or higher in accordance with the predetermined procedures, circulating a gas containing hydrogen and then reduced, thereby exerting hydrogenation activity.

The gas oil compositions of the present invention are those containing 20 to 80 percent by volume of the above-described environment friendly base gas oil and having a 90% distillation temperature of 360°C or lower, a total aromatic content of 15 percent by volume or less, a cetane index of 45 or greater, a sulfur content of 10 ppm by mass or less, an oxygen content of 1 percent by mass or less, a fatty acid alkyl ester content of 3.5 percent by mass or less, an acid number of 0.13 mgKOH/g or less, a methanol content of 0.01 percent by mass or less, a triglyceride content of 0.01 percent by mass or less, and an increase in acid number after an oxidation stability test of 0.12 mgKOH/g or less.

The gas oil compositions of the present invention contains substantially no chlorine. If chlorine is contained in the gas oil composition, there is the possibility that harmful substances such as dioxins generate in exhaust gas. The term "chlorines" used herein refers to those measured in accordance with "Testing method for industrial water-chloride ion quantitative analysis method (ion chromatography)".
The term "substantially no chlorine" means that the chlorine content is less than 0.1 ppm by mass on the basis of the total amount of the gas oil composition.

The sulfur content of the gas oil compositions of the present invention is necessarily 10 ppm by mass or less, preferably 5 ppm by mass or less, more preferably 3 ppm by mass or less, more preferably 1 ppm by mass or less with the objective of reducing poisonous substances exhausted from an engine and improving exhaust-gas post-processing system performances. The sulfur content used herein denotes the mass content of the sulfur components on the basis of the total mass of a gas oil composition measured in accordance with JIS K 2541 "Crude oil and petroleum products-Determination of sulfur content".

The oxygen content of the gas oil compositions of the present invention is necessarily 1 percent by mass or less, preferably 0.8 percent by mass or less, more preferably 0.6 percent by mass or less, more preferably 0.4 percent by mass or less, most preferably 0.2 percent by mass or less, with the objective of improving oxidation stability. The oxygen content can be measured with a conventional elemental analysis device. For example, the oxygen content is measured by converting a sample on platinum carbon to CO or further to CO₂ and measuring the amount thereof using a thermal conductivity detector.

The flash point of the gas oil compositions of the present invention is preferably 45°C or higher. If the flash point is lower than 45°C, the composition can not be handled as a gas oil composition for safety reasons. For the same reasons, the flash point is preferably 50°C or higher, more preferably 55°C or higher, more preferably 58°C or higher. The flash point referred herein denotes the value measured in accordance with JIS K 2265 "Crude oil and petroleum products-Determination of flash point".

The cetane index of the gas oil compositions of the present invention is preferably 45 or greater. If the cetane index is lower than 45, it is likely that the concentrations of PM, aldehydes, and NOx in the exhaust gas would be increased. For the same reasons, the cetane index is preferably 48 or greater, more preferably 51 or greater. The cetane index used herein denotes the value calculated in accordance with "8.4 cetane index calculation method using variables equation" prescribed in JIS K 2280 "Petroleum products-Fuels-Determination of octane number, cetane number and calculation of cetane index". The cetane index defined by the JIS standards is generally applied to gas oil containing no cetane number improver. However, in the present invention, "8.4 cetane index calculation method using variables equation" is applied to a gas oil containing a cetane number improver, and the value obtained thereby is also defined as cetane index.

The cetane number of the gas oil compositions of the present invention is preferably 52 or greater, more preferably 54 or greater, more preferably 55 or greater. If the cetane number is lower than 52, it is likely that the concentrations of NOx, PM and aldehydes would be increased. There is no particular restriction on the lower limit of the cetane number. However, with the objective of reducing black smoke in the exhaust gas, the cetane number is preferably 90 or lower, more preferably 88 or lower, more preferably 85 or lower. The gas oil compositions of the present invention can be increased in cetane number by adding thereto an adequate amount of a cetane number improver, if necessary. The cetane number used herein denotes the cetane number measured in accordance with "7. Cetane number test method" prescribed in JIS K 2280 "Petroleum products-Fuels-Determination of octane number, cetane number and calculation of cetane index".

The density at 15°C of the gas oil compositions of the present invention is preferably 750 kg/cm³ or higher, more preferably 760 kg/cm³ or higher, more preferably 770 kg/cm³ or higher with the objective of retaining the calorific value. The density is preferably 850 kg/cm³ or lower, more preferably 845 kg/cm³ or lower, more preferably 840 kg/cm³ or lower with the objective of reducing NOx and PM emissions. The density referred herein denotes the density measured in accordance with JIS K 2249 "Crude petroleum and petroleum products-Determination of density and petroleum measurement tables based on a reference temperature (15°C)".

The gas oil compositions of the present invention have necessarily such a lubricating performance that the HFRR wear scar diameter (WS1.4) is preferably 410 µm or smaller, more preferably 400 µm or smaller. If the HFRR wear scar diameter (WS1.4) is greater than 410 µm, the composition would cause a diesel engine equipped with a distribution type injection pump in particular to be increased in driving torque and in wear on each part of the pump while the engine is driven, possibly leading not only to degradation of the exhaust gas properties but also to the breakdown of the engine itself. Also in an electronically controlled fuel injection pump enabling a high pressure injection, wear on the sliding parts would likely occur.

The HFRR wear scar diameter (WS1.4) referred herein denotes the lubricity measured in accordance with JPI-5S-50-98 "Gas oil -Testing Method for Lubricity" prescribed in JPI Standard and Manuals Testing Method for Petroleum Products published by Japan Petroleum Inst.

The total aromatic content of the gas oil composition of the present invention is necessarily 15 percent by volume or less, with the objective of enhancing the environment load reducing effects and reducing NOx and PM. The aromatic content used herein denotes the volume percentage (volume %) of the aromatic component content measured in accordance with JPI-5S-49-97 "Petroleum Products-Determination of Hydrocarbon Types-High Performance Liquid Chromatography" prescribed in JPI Standard and Manuals Testing Method for Petroleum Products published by Japan Petroleum Inst.

The water content of the gas oil compositions of the present invention is necessarily 300 ppm by volume or less, preferably 250 ppm by volume or less, more preferably 200 ppm by volume or less with the objective of suppressing adverse affects on parts such as a fuel tank or hydrolysis of ester compounds. The water content referred herein denotes the water content defined by JIS K 2275 "Crude oil and petroleum products-Determination of water content".

With regard to the distillation characteristics of the gas oil compositions of the present invention, the 90% distillation temperature is preferably 360°C or lower, more preferably 340°C or lower, more preferably 330°C or lower, particularly preferably 320°C or lower. If the 90% distillation temperature exceeds the upper limit, the emissions of PM and fine particles would increase. The 90% distillation temperature is preferably 280°C or higher, more preferably 285°C or higher, more preferably 290°C or higher, more preferably 295°C or higher. If the 90% distillation temperature is lower than the lower limit, the resulting composition would fail to attain a sufficient fuel consumption improving effect, resulting in the tendency that the engine output is reduced. The 90% distillation temperature referred herein denotes the values measured in accordance with JIS K 2254 "Petroleum products-Determination of distillation characteristics".

There is no particular restriction on the kinematic viscosity at 30°C of the gas oil compositions of the present invention. However, the kinematic viscosity at 30°C is preferably 2.5 mm²/s or greater, more preferably 2.7 mm²/s or greater, more preferably 2.9 mm²/s or greater. If the kinematic viscosity is lower than 2.5 mm²/s, it would be difficult to control the fuel injection timing at the fuel injection pump side, and lubricity at each part of the fuel injection pump installed in an engine would be reduced. The kinematic viscosity at 30°C is preferably 5 mm²/s or lower, more preferably 4.7 mm²/s or lower, more preferably 4.5 mm²/s or lower. If the kinematic viscosity exceeds 5 mm²/s, the fuel injection system is destabilized due to an increase in resistance therein and thus the NOx and PM concentrations in the exhaust gas are increased. The kinematic viscosity referred herein denotes the value measured in accordance with JIS K 2283 "Crude petroleum and petroleum products-Determination of kinematic viscosity and calculation of viscosity index from kinematic viscosity".

The carbon residue of the 10% distillation residue of the gas oil compositions of the present invention is necessarily 0.1 percent by mass or less, more preferably 0.08 percent by mass or less, more preferably 0.06 percent by mass or less with the objective of reducing fine particles and PM and retaining the performances of the exhaust-gas post-processing system installed in an engine. The carbon residue of the 10% distillation residue referred herein denotes that measured in accordance with JIS K 2270 "Crude petroleum and petroleum products-Determination of carbon residue".

The acid number of the gas oil compositions of the present invention is necessarily 0.13 mgKOH/g or less in view of adverse affects on engine parts. The acid number indicates the free fatty acid amount in a mixture. If the acid number is larger, engine parts would be adversely affected by acid compounds. Therefore, the acid number is preferably 0.10 mgKOH/g or less, more preferably 0.08 mgKOH/g or less, more preferably 0.05 mgKOH/g or less. The acid number referred herein denotes the total acid number measured in accordance with JIS K 2501 "Petroleum products and lubricants-Determination of neutralized number".

The fatty acid methyl ester content of the gas oil compositions of the present invention is necessarily 3.5 percent by mass or less, preferably 2.0 percent by mass or less, more preferably 1.0 percent by mass or less, more preferably 0.5 percent by mass or less with the objective of preventing the deterioration of burnout properties of the composition upon combustion in an engine. The fatty acid methyl ester content referred herein denotes that measured in accordance with EN 14103.

The methanol content of the gas oil compositions of the present invention is necessarily 0.01 percent by mass or less, preferably 0.008 percent by mass or less, more preferably 0.006 percent by mass or less, more preferably 0.005 percent by mass or less with the objective of preventing adverse affects on a fuel injection system. The methanol content referred herein denotes that measured in accordance with JIS K 2536 and EN 14110.

The triglyceride content of the gas oil compositions of the present invention is necessarily 0.01 percent by mass or less, preferably 0.008 percent by mass or less, more preferably 0.006 percent by mass or less, more preferably 0.005 percent by mass or less with the objective of preventing adverse affects on a fuel injection system. The glyceride content referred herein denotes that measured in accordance with EN 14105.

If necessary, the gas oil compositions of the present invention may be blended with a cetane number improver as much as is sufficient so as to enhance the cetane number.

The cetane number improver may be any of various compounds known as a cetane number improver for gas oil. Examples of such a cetane number improver include nitrate esters and organic peroxides. These cetane number improvers may be used alone or in combination.

Preferred for use in the present invention are nitrate esters. Examples of the nitrate esters include various nitrates such as 2-chloroethyl nitrate, 2-ethoxyethyl nitrate, isopropyl nitrate, butyl nitrate, primary amyl nitrate, secondary amyl nitrate, isoamyl nitrate, primary hexyl nitrate, secondary hexyl nitrate, n-heptyl nitrate, n-octyl nitrate, 2-ethylhexylnitrate, cyclohexyl nitrate, and ethylene glycol dinitrate. Particularly preferred are alkyl nitrates having 6 to 8 carbon atoms.

The content of the cetane number improver is preferably 500 ppm by mass or more, more preferably 600 ppm by mass or more, more preferably 700 ppm by mass or more, more preferably 800 ppm by mass or more, most preferably 900 ppm by mass or more on the basis of the total mass of each of the gas oil compositions. If the content of the cetane number improver is less than 500 ppm by mass, the cetane number improving effect may not be attained sufficiently, leading to the tendency that PM, aldehydes, and NOx in the exhaust gas from a diesel engine are not reduced sufficiently. There is no particular restriction on the upper limit content of the cetane number improver. However, the upper limit is preferably 1400 ppm by mass or less, more preferably 1250 ppm by mass or less, more preferably 1100 ppm by mass or less, most preferably 1000 ppm by mass or less, on the basis of the total mass of each of the gas oil compositions.

The cetane number improver may be any of those synthesized in accordance with conventional methods or commercially available products. Such products in the name of cetane number improver are available in a state
wherein the effective component contributing to an improvement in cetane number (i.e., cetane number improver itself) is diluted with a suitable solvent. In the case where the gas oil compositions of the present invention are prepared using any of such commercially available products, the content of the effective component is preferably within the above-described range.

In addition to the cetane number improver, the gas oil compositions may be blended with other additives, particularly preferably with a lubricity improver and/or a detergent.

The lubricity improver may be any one or more types selected from carboxylic acid-, ester-, alcohol- and phenol-based lubricity improvers. Among these lubricity improvers, preferred are carboxylic acid- and ester-based lubricity improvers.

The carboxylic acid-based lubricity improver may be linoleic acid, oleic acid, salicylic acid, palmitic acid, myristic acid or hexadecenoic acid or a mixture of two or more of these carboxylic acids.

Examples of the ester-based lubricity improver include carboxylic acid esters of glycerin. The carboxylic acid forming the carboxylic acid ester may be of one or more types. Specific examples of the carboxylic acid include linoleic acid, oleic acid, salicylic acid, palmitic acid, myristic acid or hexadecenoic acid.

There is no particular restriction on the amount of the lubricity improver to be blended if the HFRR wear scar diameter (WS1.4) is within the above-described preferred range. However, the amount is preferably 35 ppm by mass or more, more preferably 50 ppm by mass or more on the basis of the total mass of each of the compositions. When the lubricity improver is blended in an amount within these ranges, it can effectively perform its efficacy thereof. For example, in a diesel engine equipped with a distribution type injection pump, the lubricity improver can suppress the driving torque from increasing and can reduce wear on each part of the pump while the engine is driven. The upper limit amount is preferably 150 ppm by mass or less, more preferably 105 ppm by mass or less because its effect as balanced with the amount is not obtained.

Examples of the detergents include ashless dispersants, for example, imide compounds; alkenyl succinimides such as polybutenyl succinimide synthesized from polybutenyl succinic anhydrate and ethylene polyamines; succinic acid esters such as polybutenyl succinic acid ester synthesized from polyhydric alcohols such as pentaerythritol and polybutenyl succinic anhydrate; copolymerized polymers such as copolymers of dialkylaminoethyl methacrylates, polyethylene glycol methacrylates, or vinylpyrrolidon and alkylmethacrylates; and reaction products of carboxylic acids and amines. Among these, preferred are alkenyl succinimides and reaction products of carboxylic acids and amines. These detergents may be used alone or in combination.

When an alkenyl succinimide is used, an alkenyl succinimide having a molecular weight of 1000 to 3000 may be used alone, or an alkenyl succinimide having a molecular weight of 700 to 2000 and an alkenyl succinimide having a molecular weight of 10000 to 20000 may be used in combination.

Carboxylic acids constituting reaction products of carboxylic acids and amines may be of one or more types. Specific examples of the carboxylic acids include fatty acids having 12 to 24 carbon atoms and aromatic carboxylic acids having 7 to 24 carbon atoms. Examples of fatty acids having 12 to 24 carbon atoms include, but not limited thereto, linoleic acid, oleic acid, palmitic acid, and myristic acid. Examples of aromatic carboxylic acids having 7 to 24 carbon atoms include, but not limited thereto, benzoic acid and salicylic acid. Amines constituting reaction products of carboxylic acids and amines may be of one or more types. Typical examples of amines used herein include, but not limited thereto, oleic amines. Various amines may also be used.

There is no particular restriction on the amount of the detergent to be blended. However, the amount is preferably 30 ppm by mass or more, more preferably 60 ppm by mass or more, more preferably 80 ppm by mass or more, on the basis of the total mass of each of the compositions, because the detergent can perform its effect to suppress a fuel injection nozzle from plugging. The effect may not be obtained if the amount is less than 30 ppm by mass. On the other hand, if the detergent is blended in a too much amount, its effect as balanced with the amount is not obtained. Therefore, the amount of the detergent is preferably 300 ppm by mass or less, more preferably 180 ppm by mass or less because the detergent may increase the amounts of NOx, PM and aldehydes in the exhaust gas from a diesel engine.

Like the above-described cetane number improver, products in the name of lubricity improver or detergent are available in a state wherein the effective component contributing to an improvement in lubricity or to detergency is diluted with a suitable solvent. In the case where such products are blended with the gas oil compositions of the present invention, the content of the effective component is preferably within the above-described range.

In order to further enhance the properties of the gas oil compositions of the present invention, other known fuel oil additives (hereinafter referred to as "other additives" for convenience) may be used alone or in combination. Examples of other additives include cold flow improvers such as ethylene- vinyl acetate copolymers and alkenylsuccinic amides; phenol- and amine-based anti-oxidants; metal deactivators such as salicyliden derivatives; anti-icing agents such as polyglycol ethers; anti-corrosion agents such as aliphatic amines and alkenyl succinic acid esters; anti-static additives such as anionic, cationic, and amphoteric surface active agents; coloring agents such as azo dye; and silicone-based defoaming agents.

The amounts of other additives may be arbitrarily selected. However, the amount of each of other additives is preferably 0.5 percent by mass or less, more preferably 0.2 percent by mass or less, on the basis of the total mass of each of the compositions.

The acid number increase of the gas oil composition of the present invention after an oxidation stability test is necessarily 0.12 mgKOH/g or less, preferably 0.10 mgKOH/g or less, more preferably 0.08 mgKOH/g or less in view of storage stability and compatibility to parts.

The oxidation stability test used herein is carried out at a temperature of 115°C under oxygen bubbling for 16 hours in accordance with ASTM D2274-94.

The gas oil compositions of the present invention containing an environment friendly base gas oil produced from a triglyceride-containing hydrocarbon originating from an animal or vegetable fat and/or a component originating therefrom are excellent in all life cycle CO₂ emission properties, oxidation stability, and exhaust gas characteristics.

### [Applicability in the Industry]

According to the present invention, there are provided gas oil compositions comprising an environment friendly base gas oil produced from an animal or vegetable fat and/or a component originating therefrom and as the result having excellent life cycle CO₂ emission properties, oxidation stability and exhaust gas characteristics, all of which are difficult to achieve with the conventional gas oil compositions.

### [Examples]

Hereinafter, the present invention will be described in more details by way of the following examples and comparative examples, which should not be construed as limiting the scope of the invention.

### (Examples 1 and 2 and Comparative Examples 1 to 3)

A vegetable fat having properties set forth in Table 1 and a mixture of the vegetable fat and a petroleum base oil fraction were each reacted under the conditions set forth in Table 2 to produce environment friendly base gas oils as set forth in Table 3.

The properties of a fatty acid methyl ester produced by esterifying the vegetable fat set forth in Table 1 are also set forth in Table 3. This fatty acid methyl ester is a methyl ester compound produced by reacting the vegetable fat with methanol. An ester exchange reaction was used wherein an ester compound is produced by reacting the vegetable fat directly with an alkyl alcohol, stirring at a temperature of 70°C for one hour in the presence of an alkyl catalyst(sodium methylate).

The properties of a petroleum hydrorefined oil to be blended with the environment friendly base gas oils are also set forth in Table 3.

The vegetable fat set forth in Table 1 and the environment friendly base gas oils, methyl-esterified product of the vegetable fat, and petroleum hydrorefined oil set forth in Table 3 were blended to produce gas oil compositions (Examples 1 to 2, and Comparative Examples 1 to 3).

Table 4 shows the blend ratio in each of the gas oil compositions, and the results of measurement of the density at 15°C, kinematic viscosity at 30°C, flash point, sulfur content, chlorine content, oxygen content, distillation characteristics, aromatic content, cetane number, cetane index, carbon residue content of the 10% distillation residue, water content, acid number, fatty acid alkyl ester content, methanol content and triglyceride content, of each of the gas oil compositions.

As apparent from Table 4, the gas oil composition of Examples 1 and 2 wherein the environment friendly base gas oils that are each the vegetable fat or a mixture thereof with a petroleum gas oil fraction and blended with the petroleum hydrorefined oil in amounts within the range defined by the present invention enabled the easy and certain production of gas oil compositions satisfying properties such as a 90% distillation temperature of 360°C or lower, a total aromatic content of 15 percent by volume or less, a cetane index of 45 or greater, a sulfur content of 10 ppm by mass or less, an oxygen content of 1 ppm by mass or less, a fatty acid alkyl ester content of 3.5 percent by mass or less, an acid number of 0.13 mgKOH/g or less, a methanol content of 0.01 percent by mass or less, a triglyceride content of 0.01 percent by mass or less, and an increase in acid number after an oxidation stability test of 0.12 mgKOH/g or less. Whereas, the gas oil composition of Comparative Examples 1 to 3
wherein they were produced without using the specific environment friendly base gas oil failed to produce the compositions intended by the present invention.

Next, the following various tests were carried out using the gas oil compositions of Examples 1 and 2 and Comparative Examples 1 to 3. All of the test results are set forth in Table 5. As apparent from the results of Table 5, the gas oil compositions of Examples 1 and 2 are less in carbon dioxide emission in life cycle and suppressed in dioxin emission, comparing with those of Comparative Example 1 to 3.

### (Vehicle Exhaust Gas Test)

An exhaust gas test was carried out using the following vehicle in accordance with "Traffic Safety and Nuisance Research Institute's Automobile Type Approval Test Standard supervised by Land, Infrastructure and Transportation Ministry" and Exhibit 27 "Technical Standard for 10-15 Mode Exhaust Emission Test Measurement for Diesel-fueled Motor Vehicles" to measure the dioxin emission of each of the gas oil compositions. The dioxin emission from the diesel powered vehicle was measured using a high volume sampler for PM measurement and a polyurethane foam collector in combination to capture dioxins through GC/MS in accordance with "Hazardous Air Pollutant Measurement Manual (Environment Agency)".

### (Vehicle Specifications): Vehicle 1

Type of engine: in-line 4 cylinder diesel engine with an intercooled supercharger
Displacement: 3 L
Compression ratio: 18.5
Maximum power: 125 kW/3400 rpm
Maximum torque: 350 Nm/2400 rpm
Adopted regulation: 1997 Exhaust Gas Emission Regulation
Vehicle weight: 1900 kg
Transmission: 4-speed automatic transmission Exhaust-gas post-processing system: oxidation catalyst

### (Calculation of life cycle CO₂)

Life cycle CO₂ was calculated separately as the CO₂ emitted as a result of combustion of the gas oil compositions in a vehicle equipped with a diesel-powered engine and as the CO₂ generated from oil-well drilling to pumping to a vehicle fuel tank.

The CO₂ emitted by combustion (hereinafter referred to as "Tank to Wheel CO₂" was calculated as the emissions per unit calorific value of each gas oil composition on the basis of CO₂ emissions, driving fuel efficiency, and fuel density when the above vehicle test was carried out.

The CO₂ generated from oil-well drilling to pumping to a vehicle fuel tank (hereinafter referred to as "Well to Tank CO₂") was calculated as the total CO₂ emissions during a sequence starting from the drilling of material and crude oil resources, through transportation, processing, and delivery, to pumping to a vehicle's gas tank. For calculation of "Well to Tank CO₂", the calculation was carried out in consideration of the carbon dioxide generated during the following (1B) to (5B) events. Data required for the calculation was the oil refinery operation performance date possessed by the inventors of the present invention.
(1B) Carbon dioxide emissions accompanied with the use of fuel for various processing devices and facilities such as boilers
(2B) Carbon dioxide emissions accompanied with reforming reaction in a hydrogen producing device in a processing using hydrogen
(3B) Carbon dioxide emissions accompanied with regeneration of a catalyst if the processing is carried out through a device such as a catalytic cracking device requiring continuous catalyst regeneration
(4B) Carbon dioxide emissions when a gas oil composition was produced or shipped at Yokohama, Japan, delivered therefrom to Sendai, Japan, and pumped into a vehicle there
(5B) Carbon dioxide emissions when an animal or vegetable fat and a component originating therefrom were obtained from Malaysia or regions therearound, and a gas oil composition was produced in Yokohama, Japan.

If an animal or vegetable fat and a component originating therefrom is used as fuel, a rule established in Kyoto Protocol that the carbon dioxide emissions resulting from combustion of such fuel is not counted is applied. This rule was thus applied to the above-described "Tank to Wheel CO₂" calculation.

Tables 5 shows the "Tank to Wheel CO₂" and "Well to Tank CO₂" emissions as calculated above as well as the total of these emissions, i.e., life cycle CO₂ emissions (LC). Each of the results is quantified by comparing it with the results of Comparative Example 1, the results of which was defined as 100.

**Table 1**

| | | Vegetable fat | Petroleum gas oil fraction |
|---|---|---|---|
| Density (15°C) kg/m³ | | 916 | 850 |
| Kinematic viscosity (30°C mm²/s | | - | 5.7 |
| C mass% | | - | 85 |
| H mass% | | - | 15 |
| Nitrogen content mass ppm | | - | 15 |
| Sulfercontent mass% | | <1 | 10.0 |
| Chlorine content mass ppm | | 3 | <0.1 |
| Total acid number mgKOH/g | | 0.07 | - |
| | Butyric acid group | 0 | - |
| | Caproic acid group | 0 | - |
| Ratio of fatty acid groups in fat | Caprylic acid group | 0 | - |
| | C apric acid group | 0 | - |
| | Lauric acid group | 0 | - |
| | Myristic acid group | 1 | - |
| | Palmitic acid group | 44 | - |
| mass% | Stearic acid group | 5 | - |
| | Oleic acid group | 39 | - |
| | Linoleic acid group | 10 | - |
| | Linolenic acid group | 0 | - |

**Table 2**

| HDO catalyst | Ni-Mo/silca·alumina |
|---|---|
| Reaction temperature °C | |
| Hydrogen partial pressure MPa | 11 |
| LHSV h⁻¹ | 0.5 |
| Hydrogen/oil ratio NL/L | 510 |

**Table 3**

| | | HDO treated vegetable fat | Hydrotreated mix oil of vegetable fat and petroleum gas oil fraction | Methyl-esterified product of vegetable fat | Petroleum hydrorefined oil |
|---|---|---|---|---|---|
| Density (15°C) kg/m³ | | 780 | 830 | 874 | 821 |
| Kinematic viscosity (30°C) mm ²/s | | 3.0 | 4.0 | 5.5 | 3.6 |
| Distillation characteristics °C | 10% Distillation temperature | 251.0 | 252.0 | - | 188.5 |
| | 50% Distillation temperature | 270.5 | 275.5 | - | 268.5 |
| | 90% Distillation temperature | 303.5 | 304.0 | - | 333.0 |
| Total aromatic content vol% | | <1 | 11.5 | - | 17.7 |
| Cetane number | | 78 | 65 | 62 | 57 |
| Sulfer content mass ppm | | <1 | <1 | <1 | 4 |
| Chlorine content mass ppm | | <0.1 | <0.1 | 1.2 | <0.1 |
| oxygen content mass% | | <0.1 | <0.1 | 11.9 | <0.1 |
| Total acid num ber mgKOH/g | | 0.01 | 0.01 | 0.15 | 0.01 |

**Table 4**

| | | Example 1 | Examples 2 | Comparative Example 1 | Comparative Example 2 | Comparative Example 3 |
|---|---|---|---|---|---|---|
| Petroleum hydrorefined oil vol% | | 60 | 50 | 100 | 90 | 60 |
| Vegetable fat | | | | | 10 | |
| HDO treated vegetable fat | | 40 | | | | |
| Hydro treated m ix oil of vegetable fat and petroleum gas oil fraction | | | 50 | | | |
| M ethyl-estarified product of vegetable fat | | | | | | 40 |
| Density (15°C) kg/m³ | | 805 | 826 | 821 | 831 | 842 |
| Kinematic viscosity (30°C) mm ²/s | | 3.4 | 3.3 | 3.6 | 5.3 | 3.9 |
| Flash point °C | | 77 | 75 | 72 | 82 | 73 |
| Sulfer content mass ppm | | 2 | 2 | 4 | 4 | 2 |
| Chlorine content mass ppm | | <0.1 | <0.1 | <0.1 | 0.30 | 0.48 |
| oxygen content mass% | | <0.1 | <0.1 | <0.1 | 1.1 | 4.8 |
| Distillation characteristics °C | 10% Distillation temperature | 191.0 | 193.0 | 188.5 | 191.5 | 194.0 |
| | 50% Distillation temperature | 270.5 | 271.0 | 268.5 | 277.0 | 289.0 |
| | 90% Distillation temperature | 325.0 | 319.0 | 333.0 | 365.5 | 336.0 |
| Total aromatic content vol% | | 10.6 | 14.6 | 17.7 | 15.9 | 14.2 |
| Cetane number | | 65 | 62 | 57 | 53 | 58 |
| Cetane index | | 66 | 69 | 57 | 54 | 57 |
| Carbon residue content of 10% distillation residue mass % | | 0.02 | 0.02 | 0.02 | 0.27 | 0.02 |
| Water content mass ppm | | 35 | 34 | 35 | 40 | 46 |
| Total acid number increase mgkOH/g | | 0.01 | 0.01 | 0.01 | 0.02 | 0.04 |
| Fatty acid alkyl ester content mass % | | 0.0 | 0.0 | 0.0 | 0.0 | 39.6 |
| Methanol content mass % | | 0 | 0 | 0 | 0 | 0 |
| Trlyceride content mass% | | 0 | 0 | 0 | 9.8 | 0 |
| Increase in acid number after acceleration test mgkOH/g acce le ration test | | 0.02 | 0.02 | 0.02 | 1.65 | 0.15 |

**Table 5**

| | | Example 1 | Example 2 | Comparative Example 1 | Comparative Example 2 | Comparative Example 3 |
|---|---|---|---|---|---|---|
| CO₂ emissions gCO₂/MJ | Well to Wheel | 54.5 | 69.0 | 78.1 | 72.1 | 66.6 |
| | Relative value | 70 | 88 | 100 | 92 | 85 |
| Dioxin emissions Relative value :the result of Comparative Example 3 is defined as 100) | | 35 | 29 | 24 | 68 | 100 |
| Oxidation stability | | ○ | ○ | ○ | × | △ |

## Claims

1. A gas oil composition comprising:
20 to 80 percent by volume of a base gas oil with a 90% distillation temperature of 360°C or lower, a sulfur content of 10 ppm by mass or less, and an oxygen content of 1 percent by mass or less, produced by bringing in the presence of hydrogen a feedstock comprising an animal or vegetable fat and/or a component originating therefrom, into contact with a catalyst comprising a porous inorganic oxide comprising two or more types of elements selected from aluminum, silicon, zirconium, boron, titanium and magnesium and one or more types of metals selected from the group consisting of the Groups 6A and 8 elements of the periodic table, supported thereon, under conditions where the hydrogen pressure is from 2 to 13 MPa, the liquid hourly space velocity is from 0.1 to 3.0 h⁻¹, the hydrogen oil ratio is from 150 to 1500 NL/L, and the reaction temperature is from 150 to 480°C,
the gas oil composition having a 90% distillation temperature of 360°C or lower, a total aromatic content of 15 percent by volume or less, a cetane index of 45 or greater, a sulfur content of 10 ppm by mass or less, an oxygen content of 1 percent by mass or less, a fatty acid alkyl ester content of 3.5 percent by mass or less, an acid number of 0.13 mgKOH/g or less, a methanol content of 0.01 percent by mass or less, a triglyceride content of 0.01 percent by mass or less, and an increase in acid number after an oxidation stability test of 0.12 mgKOH/g or less.

2. A gas oil composition comprising:
a base gas oil with a 90% distillation temperature of 360°C or lower, a sulfur content of 10 ppm by mass or less, and an oxygen content of 1 percent by mass or less, produced by bringing in the presence of hydrogen a feedstock comprising an animal or vegetable fat and/or a component originating therefrom, into contact with a catalyst comprising a porous inorganic oxide comprising two or more types of elements selected from aluminum, silicon, zirconium, boron, titanium and magnesium and one or more types of metals selected from the group consisting of the Groups 6A and 8 elements of the periodic table, supported thereon, under conditions where the hydrogen pressure is from 2 to 13 MPa, the liquid hourly space velocity is from 0.1 to 3.0 h⁻¹, the hydrogen oil ratio is from 150 to 1500 NL/L, and the reaction temperature is from 150 to 480°C; and
a hydrorefined oil produced by refining crude oil, mixed at a blend ratio of 20 to 80 percent by volume:80 to 20 percent by volume,
the gas oil composition having a 90% distillation temperature of 360°C or lower, a total aromatic content of 15 percent by volume or less, a cetane index of 45 or greater, a sulfur content of 10 ppm by mass or less, an oxygen content of 1 percent by mass or less, a fatty acid alkyl ester content of 3.5 percent by mass or less, an acid number of 0.13 mgKOH/g or less, a methanol content of 0.01 percent by mass or less, a triglyceride content of 0.01 percent by mass or less, and an increase in acid number after an oxidation stability test of 0.12 mgKOH/g or less.

3. A gas oil composition comprising:
20 to 80 percent by volume of a base gas oil with a 90% distillation temperature of 360°C or lower, a sulfur content of 10 ppm by mass or less, and an oxygen content of 1 percent by mass or less, produced by bringing in the presence of hydrogen a feedstock comprising a mixture of 10 to 90 percent by volume of an animal or vegetable fat and/or a component originating therefrom and 90 to 10 percent by volume of a petroleum base oil produced by refining crude oil, into contact with a catalyst comprising a porous inorganic oxide comprising two or more types of elements selected from aluminum, silicon, zirconium, boron, titanium and magnesium and one or more types of metals selected from the group consisting of the Groups 6A and 8 elements of the periodic table, supported thereon, under conditions where the hydrogen pressure is from 2 to 13 MPa, the liquid hourly space velocity is from 0.1 to 3.0 h⁻¹, the hydrogen oil ratio is from 150 to 1500 NL/L, and the reaction temperature is from 150 to 480°C;
the gas oil composition having a 90% distillation temperature of 360°C or lower, a total aromatic content of 15 percent by volume or less, a cetane index of 45 or greater, a sulfur content of 10 ppm by mass or less, an oxygen content of 1 percent by mass or less, a fatty acid alkyl ester content of 3. 5 percent by mass or less, an acid number of 0.13 mgKOH/g or less, a methanol content of 0.01 percent by mass or less, a triglyceride content of 0.01 percent by mass or less, and an increase in acid number after an oxidation stability test of 0.12 mgKOH/g or less.

4. A gas oil composition comprising:
a base gas oil with a 90% distillation temperature of 360°C or lower, a sulfur content of 10 ppm by mass or less, and an oxygen content of 1 percent by mass or less, produced by bringing in the presence of hydrogen a feedstock comprising a mixture of 10 to 90 percent by volume of an animal or vegetable fat and/or a component originating therefrom and 90 to 10 percent by volume of a petroleum base oil produced by refining crude oil, into contact with a catalyst comprising a porous inorganic oxide comprising two or more types of elements selected from aluminum, silicon, zirconium, boron, titanium and magnesium and one or more types of metals selected from the group consisting of the Groups 6A and 8 elements of the periodic table, supported thereon, under conditions where the hydrogen pressure is from 2 to 13 MPa, the liquid hourly space velocity is from 0.1 to 3.0 h⁻¹, the hydrogen oil ratio is from 150 to 1500 NL/L, and the reaction temperature is from 150 to 480°C; and
a hydrorefined oil produced by refining crude oil, mixed at a blend ratio of 20 to 80 percent by volume:80 to 20 percent by volume,
the gas oil composition having a 90% distillation temperature of 360°C or lower, a total aromatic content of 15 percent by volume or less, a cetane index of 45 or greater, a sulfur content of 10 ppm by mass or less, an oxygen content of 1 percent by mass or less, a fatty acid alkyl ester content of 3.5 percent by mass or less, an acid number of 0.13 mgKOH/g or less, a methanol content of 0.01 percent by mass or less, a triglyceride content of 0.01 percent by mass or less, and an increase in acid number after an oxidation stability test of 0.12 mgKOH/g or less.

5. The oil composition according to any one of claims 1 to 4, wherein the composition contains substantially no chlorine.
